# EUROPÄISCHE PATENTSCHRIFT

(11) **EP 4 163 004 B1**
(45) Veröffentlichungstag und Bekanntmachung des Hinweises auf die Patenterteilung: **30.04.2025**
(21) Anmeldenummer: 22197588.1
(22) Anmeldetag: 23.09.2022
(51) Int. Cl.: B01D 46/00, B01D 46/12, B01D 46/64

(54) **VORRICHTUNG ZUR ABTRENNUNG EINES STOFFES AUS EINEM GAS**
DEVICE FOR SEPARATING A SUBSTANCE FROM A GAS
DISPOSITIF POUR SÉPARER UNE SUBSTANCE D'UN GAZ

(30) Priorität: 06.10.2021 AT 508012021
(43) Veröffentlichungstag der Anmeldung: 12.04.2023
(73) Patentinhaber: Aigner GmbH, 4623 Gunskirchen (AT)
(72) Erfinder: Kraus, Helmut, 4053 Moos/Ansfelden (AT)
(74) Vertreter: Fabian, Ferdinand

(56) Entgegenhaltungen:
- WO-A1-97/40917
- DE-A1- 10 337 652
- DE-A1- 19 645 096
- DE-U1- 202020 104 163
- KR-A- 20190 093 422
- US-A1- 2006 021 932
- US-A1- 2020 188 827

## Beschreibung

Die Erfindung betrifft eine Vorrichtung zur Abtrennung eines Stoffes aus einem Gas, umfassend ein Gehäuse, das eine äußere Hülle der Vorrichtung bildet, zumindest ein Filtermodul, wobei das Filtermodul zumindest ein Filterelement aufweist, das in einem Rahmen gehalten ist, der einen Teil des Gehäuses bildet, und der Rahmen eine freie Fläche definiert, die von dem Rahmen umgeben ist, wobei die Vorrichtung weiter ein Saugmodul mit einem Saugmodulgehäuse aufweist, wobei das Saugmodul und das zumindest eine Filtermodul übereinander angeordnet sind.

Vorrichtungen zur Abscheidung von Feststoffen aus einem Gasstrom sind in der Technik weit verbreitet und oftmals beschrieben worden. Unter anderem sind auch modular aufgebaute Systeme bekannt. So beschreibt die DE 196 45 096 A1 ein Luftreinigungsgerät mit einem Ansaugteil, einem Ventilatorgehäuse mit einem oder mehreren Ventilatoren und ein oder mehrere, vor oder nach dem Ventilator angeordnete, Luftfilter. Das Gerät weist ein mit einem Sockel ausgebildetes Gehäuse aus turmartig übereinander angeordneten, im Dichtsitz ineinandergreifenden und voneinander leicht lösbaren, modulartig ausgebildeten Funktionsteilen auf, die mit mindestens einem, am seitlichen Teil des Gehäuses mittels einer Schwenkaufnahme schwenkbar angeordneten Schwenkhebel zusammengespannt sind. Der Schwenkhebel umgreift dabei alle Teile des Gehäuses von außen.

Die DE 103 37 652 A1 beschreibt ein Gas-Filter, insbesondere Luftansaugfilter eines Nutzkraftfahrzeuges, mit einem durchströmbaren, plattenförmigen, in einem Filtergehäuse einen einzigen Reinraum von einem einzigen Rohraum trennenden Filterelement, wobei zumindest ein Teilbereich des Filters aus anschlussgleichen Teilelementen zusammengesetzt ist, in dem mindestens einen, aus Teilelementen bestehenden Teilbereich ausschließlich die Teilelemente das Gehäuse und das plattenförmige Filterelement des Filters bilden, und an den aneinanderliegenden Seiten der Teilelemente die aneinanderstoßenden Bereiche der das Filtergehäuse und das Filterelement bildenden Teilelemente jeweils gegeneinander gedichtet sind.

Aus der US 2020/0188827 A1 ist ein Luftfiltersystem bekannt, umfassend ein Hauptsystem und ein Filtermodul. Das Hauptsystem umfasst einen Hauptkörper mit einem Lufteinlass, einer Luftstromabdeckung mit einem Luftauslass und einen primären Filterkern, der austauschbar in dem Hauptkörper angeordnet ist, wobei die Luftstromabdeckung abnehmbar an den Hauptkörper gekoppelt ist, um einen Basis-Luftfiltermodus zum Filtern von Luft von dem Lufteinlass zu dem Luftauslass durch den primären Filterkern zu bilden. Das Filtermodul ist abnehmbar zwischen dem Hauptkörper und der Luftstromabdeckung gekoppelt, um einen zusätzlichen Luftfilterungsmodus zu bilden, wobei das Filtermodul einen sekundären Filterkern enthält, der zum Filtern der Luft nach dem Durchgang durch den primären Filterkern und vor dem Vorhandensein des Luftauslasses angeordnet ist.

Aus der US 2006/021932 A1 ist ein Flachfilter bekannt, umfassend ein Gehäuse, das als Abschnitt eines Inline-Fluidströmungskanals konfiguriert ist, ein Filter im Gehäuse, und ein Verbindungselement, das dazu konfiguriert ist, das Gehäuse mit mindestens einem Teil eines solchen Inline-Fluidströmungskanals zu verbinden, wobei das Verbindungselement mindestens einen hakenartigen Finger umfasst, der so konfiguriert ist, dass er in einen Inline-Fluidströmungskanal eingreift, um einem Entfernen des Gehäuses von einem derartigen Inline-Fluidströmungskanal zu widerstehen.

Die WO 97/40917 A1 beschreibt eine Filtervorrichtung, umfassend ein Filtermedium, das ein Filterelement bildet, das eine Außenfläche, eine stromaufwärtsliegende Seite und eine stromabwärtsliegende Seite besitzt; wobei das Filtermedium eine gewellte Lage und mindestens eine Decklage umfasst, die miteinander verbunden sind, um Wellenkammerwände zu bilden; die Wellenkammerwände eine Vielzahl von Wellenkammern begrenzen, die sich in Richtung von der stromaufwärtsliegenden Seite zur stromabwärtsliegenden Seite erstrecken; benachbarte Wellenkammern versetzte gegenüberliegende offene und geschlossene Enden besitzen; wobei die Filtervorrichtung gekennzeichnet ist durch eine undurchlässige Schicht, die die Außenfläche des gewellten Filtermediums umgibt, ein Befestigungsteil, das sich radial vom Filterelement erstreckt und das Filterelement umgibt, und ein erstes Dichtungselement, das am Befestigungsteil befestigt ist und das Filtermedium umgibt, wobei das Befestigungsteil und das erste Dichtungselement jeweils von der stromaufwärtsliegenden und stromabwärtsliegenden Seite ausgespart sind.

Die DE 20 2020 104 163 U1 beschreibt einen Luftfilter, umfassend einen Luftblaskasten, in dem ein Luftgebläse montiert ist, mehrere erste Filterkasten, die senkrecht aufeinandergestapelt und über dem Luftblaskasten angeordnet sind, und einen Lufteinlasskasten mit einem Lufteinlass, der oben auf dem obersten ersten Filterkasten angeordnet ist, wobei jeder erste Filterkasten ein hohler Kasten ist, um einen Aufnahmeraum in diesem zu bilden, der konfiguriert ist, um mindestens einen Filter aufzunehmen, wobei weiter jeder erste Filterkasten eine untere Wand aufweist, die sich von einer Umfangskante von dessen Boden waagerecht und nach innen erstreckt, ein geschlossener Flansch von einer Umfangskante der unteren Wand nach oben vorsteht, der konfiguriert ist, um luftdicht gegen einen Boden des Filters angedrückt zu werden, mehrere symmetrisch um eine Innenwand eines jeden ersten Filterkastens angeordnet Eingriffssitze, mehrere luftdichte Glieder, die aus einem elastisch verformbaren Material hergestellt sind, und gleitend an den Eingriffssitzen eines jeden ersten Filterkastens angeordnet sind, wobei jedes luftdichte Glied aus einer Oberseite, die mit der unteren Wand des oberen ersten Filterkastens niedergedrückt werden kann, und einer Bodenfläche, die inwendig im ersten Filterkasten an den Filter angedrückt werden kann, besteht. Mehrere Befestigungseinheiten sind am Luftblaskasten, am ersten Filterkasten bzw. am Lufteinlasskasten befestigt, wobei jede Befestigungseinheit aus einem oberen Befestigungsglied und einem unteren Befestigungsglied besteht, die oberen Befestigungsglieder an den oberen Abschnitten der Außenwände der Luftblaskasten angeordnet sind, der erste Filterkasten und der Lufteinlasskasten sowie die unteren Befestigungsglieder der Befestigungseinheiten an den unteren Abschnitten der Außenwände des Luftblaskastens angeordnet sind, und der erste Filterkasten und die Lufteinlasskasten an den entsprechenden oberen Befestigungsgliedern befestigt werden.

Die KR 2019-0093422 A1 beschreibt einen Fahrzeugluftfilter mit übereinander gestapelten und über Magnete miteinander verbundenen Filterelementen, einem Saugmodul und einem Auslassmodul.

Der vorliegenden Erfindung liegt die Aufgabe zu Grunde, den Aufbau derartiger Filtervorrichtungen zu vereinfachen.

Die Aufgabe der Erfindung wird bei eingangs genannter Vorrichtung dadurch gelöst, dass die Vorrichtung ein Anschlussmodul aufweist, das zumindest einen Einlass für das verunreinigte Gas aufweist, und das ein Anschlussmodulgehäuse aufweist, das einen Teil des Gehäuses bildet, sodass das Gehäuse aus dem Saugmodulgehäus, dem Anschlussmodulgehäuse und dem Rahmen des Filtermoduls oder den Rahmen der Filtermodule gebildet ist, wobei das Anschlussmodul über dem zumindest einen Filtermodul angeordnet ist, sodass das zumindest eine Filtermodul zwischen dem Anschlussmodul und dem Saugmodul angeordnet ist, und das Saugmodul ausschließlich über das Filtermodul oder die mehreren Filtermodule mit dem Anschlussmodul verbunden ist und wobei das Filterelement mit dem Rahmen des Filtermoduls nicht lösbar verbunden ist oder die Filterelemente mit dem zugehörigen Rahmen des jeweiligen Filtermoduls nicht lösbar verbunden sind, und wobei das Filterelement die vom Rahmen definierte freie Fläche zur Gänze einnimmt, sodass das zu reinigende Gas das Filterelement durchströmen muss.

Von Vorteil ist dabei, dass es damit nicht mehr notwendig ist, das Filter an sich in ein gesondertes Gehäuse einzusetzen. Vielmehr bildet das Filtermodul der Erfindung eine eigenständige Einheit, die auch in unterschiedlichsten Filterkonfigurationen einer derartigen Luftfilteranlage rasch, und ohne weitere Anpassungsmaßnahmen treffen zu müssen, eingesetzt werden kann. Somit wird mit der Erfindung die Modularität einer Vorrichtung zur Abtrennung eines Stoffes aus einem Gas weiter ausgebaut. Die verbesserte Modularität erlaubt einen vereinfachten Aufbau der Vorrichtung, da ein derzeit übliches Übergehäuse zur Aufnahme der Filterelemente nicht mehr erforderlich ist. Neben diesem vereinfachten Aufbau ist aber auch die Entsorgung einfacher durchführbar, da das Filtermodul als gesamtes entsorgt werden kann und nicht aus einem gesonderten Gehäuse herausgenommen und aufwändig verpackt werden muss. Der Rahmen selbst kann bereits einen Teil der Verpackung für die Entsorgung bilden.

Gemäß einer bevorzugten Ausführungsvariante der Erfindung kann vorgesehen sein, dass der Rahmen des Filtermoduls aus einem nichtmetallischen Werkstoff besteht, womit die Entsorgung des gebrauchten Filtermoduls vereinfacht werden kann, insbesondere wenn das Filterelement ebenfalls aus einem nichtmetallischen Werkstoff besteht.

Nach einer Ausführungsvariante dazu kann vorgesehen sein, dass der Rahmen des Filtermoduls zumindest teilweise aus einem Faserwerkstoff besteht, womit der voranstehend genannte Effekt weiter verbessert werden kann. Zudem kann damit dem Rahmen des Filtermoduls auch eine höhere Festigkeit verliehen werden, insbesondere wenn Holzfasern als Werkstoff eingesetzt werden.

Zu weiteren Erhöhung der Modularität kann vorgesehen sein, dass mehrere Filtermodule übereinander angeordnet sind, wobei jedes der Filtermodule mit einem Filterelement, das von einem Rahmen gehalten ist, ausgebildet ist, und wobei sämtliche Rahmen der Filtermodule einen Teil des Gehäuses der Vorrichtung bilden. Es ist damit möglich, unterschiedlichste Zusammenstellungen von Filtermodulen in derartigen Vorrichtungen zu ermöglichen, beispielsweise in Hinblick auf die Filterklasse, d.h. das Partikel-Rückhaltevermögen der Filterelemente. Zudem kann mit entsprechenden Filterpartikeln, wie beispielsweise Aktivkohle, auch eine (gleichzeitige) Abscheidung von Gasen erfolgen.

Zur Verbesserung der Handhabung des Filtermoduls kann gemäß einer Ausführungsvariante der Erfindung vorgesehen sein, dass an dem Filtermodul ein Dichtelement angeformt ist. Zusätzlich kann damit auch die dichtende Verbindung zwischen den einzelnen Gehäusebestandteilen verbessert werden.

Ebenfalls zur Vereinfachung der Handhabbarkeit der Filtermodule kann nach einer anderen Ausführungsvariante der Erfindung vorgesehen sein, dass die mehreren Filtermodule über Spann-Verschlüsse miteinander verbunden sind. Es ist damit ein rascher werkzeugloser Zusammenbau bzw. eine rasche werkzeuglose Demontage der Vorrichtung möglich.

Zur Verbesserung der Stabilität der Vorrichtung zur Abtrennung eines Stoffes aus einem Gas kann entsprechend einer Ausführungsvariante der Erfindung vorgesehen sein, dass zwischen Gehäuseteilen ein Formschluss ausgebildet ist. Bei entsprechender Gestaltung der Formschlüsse kann damit der Vorrichtung auch eine Poka Yoke Funktionalität verliehen werden, die dem Anwender der Vorrichtung eine bestimmte Abfolge des Zusammenbaus vorgibt, beispielsweise in Hinblick auf die Abfolge von Filterelementen unterschiedlicher Filterklassen.

Zur Verbesserung der Handhabung der Filtermodule kann gemäß einer weiteren Ausführungsvariante der Erfindung vorgesehen sein, dass an dem zumindest einen Filtermodul ein Handhabungselement, beispielsweise ein Band oder dgl., angeordnet ist.

Nach weiteren Ausführungsvarianten der Erfindung kann zur Feststellung der Filterverschmutzung vorgesehen sein, dass in zumindest einer Rahmenwand zumindest ein Strömungskanal angeordnet ist, der zu einem vom Rahmen umgebenen Raum eine Strömungsverbindung aufweist, bzw. dass pro Filtermodul zumindest zwei Strömungskanäle im Rahmen angeordnet sind, wobei ein Strömungskanal mit einer ersten Messstelle unterhalb des Filterelementes strömungsverbunden ist und der zweite Strömungskanal mit einer zweiten Messstelle oberhalb des Filterelementes strömungsverbunden ist. Durch die Anordnung des zumindest einen Strömungskanals innerhalb der Wand ist dieser besser vor einer Beschädigung geschützt.

Zum besseren Verständnis der Erfindung wird diese anhand der nachfolgenden Figuren näher erläutert.

Es zeigt jeweils in vereinfachter, schematischer Darstellung:
- Fig. 1: Eine Vorrichtung zur Abtrennung eines Stoffes aus einem Gas;
- Fig. 2: Ein Filtermodul;
- Fig. 3: Einen Ausschnitt aus einer Ausführungsvariante eines Filtermoduls in Seitenansicht geschnitten;
- Fig. 4: Einen Ausschnitt aus einer weiteren Ausführungsvariante eines Filtermoduls in Seitenansicht geschnitten;
- Fig. 5: Einen Ausschnitt des Filtermoduls nach Fig. 4 in Draufsicht geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

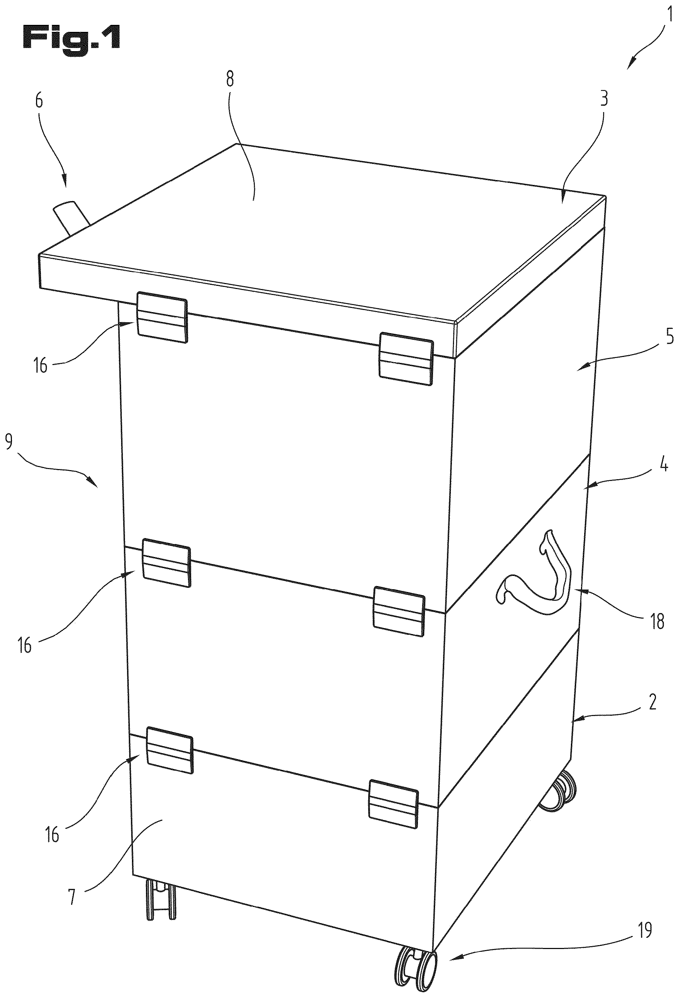

In Fig. 1 ist eine bevorzugte Ausführungsvariante einer Vorrichtung 1 zur Abtrennung eines Stoffes aus einem Gas (im Folgenden nur mehr als Vorrichtung 1 bezeichnet) dargestellt. Die Vorrichtung 1 kann auch als Luftfilter bezeichnet werden.

Die Vorrichtung 1 kann beispielsweise zur Abtrennung von Feststoffen aus Abluft von Schweißanlagen (sogenannter Schweißrauch), von Lötanlagen, von Brenn- und Plasmaschneidanlagen, von Laseranlagen, von Schleifstaub, zur Reinigung von Öl- und Emulsionsnebeln, von Lacknebeln, etc., eingesetzt werden. Dabei können die Partikel in unterschiedlichen Fraktionen abgetrennt werden, beispielsweise als Grobstaub und als Feinstaub. Diese Anwendungen der Vorrichtung 1 sind als Beispiele und das Anwendungsspektrum der Vorrichtung 1 nicht beschränkend zu verstehen. Die Vorrichtung 1 kann auch zur Abtrennung eines Gases aus einem Gasstrom verwendet werden.

Die Vorrichtung 1 nach Fig. 1 umfasst ein Saugmodul 2, ein Anschlussmodul 3 und zwei Filtermodule 4, 5 bzw. besteht daraus. Prinzipiell kann in der Vorrichtung 1 eine von zwei verschiedene Anzahl an Filtermodulen 4, 5 vorgesehen sein, beispielsweise nur eines oder drei oder vier oder fünf, etc.

Das Saugmodul 2, das zumindest eine Filtermodul 4 oder die Filtermodule 4, 5 und das Anschlussmodul 3 sind übereinander angeordnet, wobei das zumindest eine Filtermodul 4 oder die Filtermodule 4, 5 zwischen dem Saugmodul 2 und dem Anschlussmodul 3 angeordnet ist/sind. Das Saugmodul 2 ist ausschließlich über das Filtermodul 4 oder die mehreren Filtermodule 4, 5 mit dem Anschlussmodul 3 verbunden, sodass zwischen diesen also kein weiteres Verbindungselement vorhanden ist.

Die Module der Vorrichtung 1 sind turmartig übereinander angeordnet. Das Saugmodul 2 ist das unterste Modul der Vorrichtung 1.Im Saugmodul 2 verbirgt sich die Technik der Vorrichtung 1, also beispielsweise zumindest eine Saugeinrichtung, wie z.B. ein Ventilator, eine Steuerungs- und/oder Regeleinrichtung, etc. Da diese technischen Komponenten von derartigen Luftfilteranlagen bzw. Vorrichtungen 1 bekannt sind, sei zu weiteren Einzelheiten dazu auf den einschlägigen Stand der Technik verwiesen.

Das Anschlussmodul 3 bildet den oberen Abschluss der Vorrichtung 1. Das Anschlussmodul 3 weist zumindest einen Einlass 6 auf. Über diesen Einlass 6 wird der Vorrichtung 1 das verunreinigte Gas, wie beispielsweise die verunreinigte Luft zugeführt. Der Einlass 6 kann dazu für den Anschluss einer Leitung für das verunreinigte Gas oder einer Abzugeinrichtung, z.B. einer Abzughaube, vorgesehen sein. In Fig. 1 ist der Einlass 6 seitlich am Anschlussmodul 3 angeordnet. Er kann aber auch oben angeordnet sein.

Es sei an dieser Stelle der Vollständigkeit halber erwähnt, dass die Vorrichtung 1 auch mehr als ein Saugmodul 2 und/oder mehr als ein Anschlussmodul 3 aufweisen kann.

Zur Veränderung bzw. Reduzierung von sogenanntem Strömungsrauschen kann nach einer Ausführungsvariante der Vorrichtung 1 der zumindest eine Einlass 6 des Anschlussmodulgehäuses 8 entsprechend orientiert bzw. ausgebildet werden. Beispielswiese kann der Einlass 6 durch einen nach unten offenen Rohrstuten gebildet werden.

Das Saugmodul 2 weist ein Saugmodulgehäuse 7 und das Anschlussmodul 3 ein Anschlussmodulgehäuse 8 auf. Das Saugmodulgehäuse 7 und das Anschlussmodulgehäuse 8 können beispielsweise aus einem Metall, insbesondere aus einem Blech, gefertigt sein. Das Saugmodulgehäuse 7 und das Anschlussmodulgehäuse 8 sind Teil eines Gehäuses 9 der Vorrichtung 1, das die äußere Hülle der Vorrichtung 1 bildet.

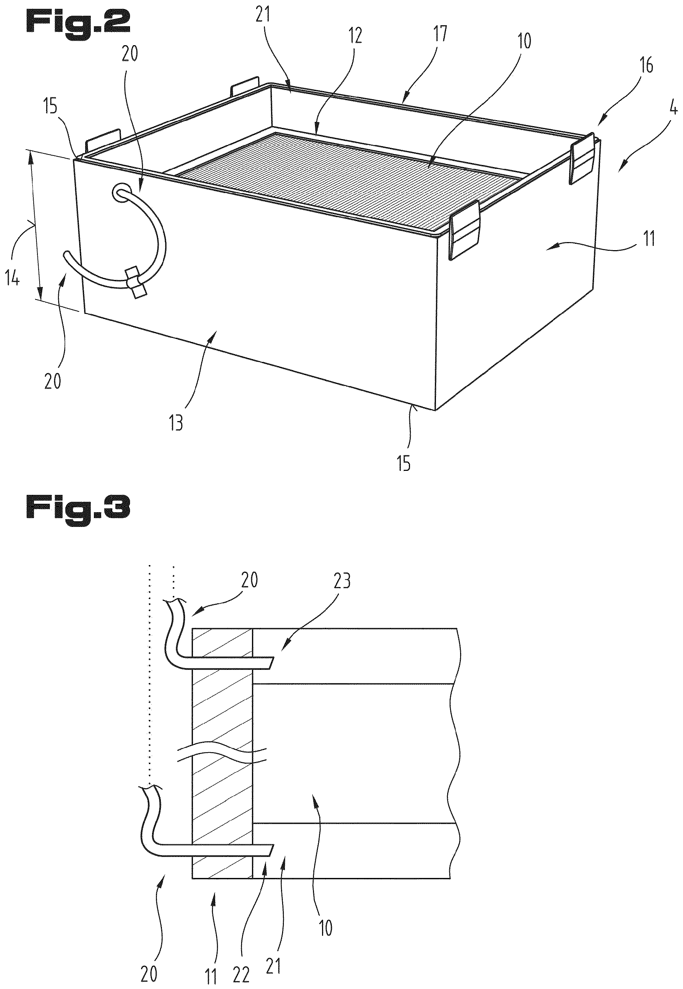

In Fig. 2 ist das Filtermodul 4 dargestellt. Die Filtermodule 4, 5 einer Vorrichtung 1 können vom Prinzip her gleich ausgebildet sein, sodass im Folgenden nur ein Filtermodul 4 beschrieben wird.

Das Filtermodul 4 weist zumindest ein Filterelement 10 auf. Es können auch mehr als ein Filterelement 10 im Filtermodul 4 angeordnet sein, beispielsweise zwei unmittelbar übereinander oder mit Abstand zueinander.

Bei mehr als einem Filterelement 10 pro Filtermodul 4 können diese gleich oder unterschiedlich ausgebildet sein. Insbesondere können diese eine unterschiedliche Durchlässigkeit für Feststoffpartikel aufweisen, also eine unterschiedliche Filterklasse haben.

Wenn in der Vorrichtung 1 unterschiedliche Filtermodule 4, 5 angeordnet sind, dann können sich diese (ausschließlich) durch Filterelemente 10 unterscheiden, die unterschiedlichen Filterklassen angehören, sodass also beispielsweise ein Grob- und Feinstaubabscheidung mit der Vorrichtung 1 möglich ist. Die konstruktive Ausgestaltung der Filtermodule kann aber gleich sein, bzw. gegebenenfalls auch unterschiedlich, beispielsweise indem die Filtermodule 4, 5 unterschiedliche Höhen aufweisen.

Das zumindest eine Filterelement 10 ist in einem Rahmen 11 des Filtermoduls 4 gehalten und mit diesem nicht lösbar (untrennbar) verbunden. Nicht lösbar bedeutet in diesem Zusammenhang, dass das Filterelement 10 nicht ohne Zerstörung des Filterelementes 10 und/oder des Verbindungsmittels vom Rahmen 11 getrennt werden kann, wie dies bei lösbaren Verbindungen der Fall ist. Beispielsweise kann das Filterelement 10 mit dem Rahmen 11 stoffschlüssig verbunden sein, beispielsweise verklebt oder verschweißt, z.B. mittels eines thermoplastischen Kunststoffes, sein. Andere Verbindungsmethoden sind je nach Rahmenmaterial ebenfalls einsetzbar, beispielsweise kann das Filterelement 10 auf den Rahmen 11 aufgenietet oder an diesen angenäht, etc., sein.

Weiter kann das Filterelement 10 an einem Steg 12 anliegend oder aufliegend angeordnet sein bzw. in eine Nut dieses Steges 12 eingreifend angeordnet sein. Der Steg 12 bzw. entsprechenden Teile davon, ist/sind vorzugsweise einstückig mit dem Rahmen 11 bzw. Rahmenwänden 13 ausgebildet.

Der Rahmen 11 kann aus einer einzigen Rahmenwand 13 gebildet sein, deren gegenüberliegende Stirnflächen zum Rahmen 11 (d.h. zu einem Mantel) miteinander verbunden sind. Der Rahmen 11 kann aber auch aus mehreren Rahmenwänden 13 gebildet sein, die miteinander verbunden sind, beispielsweise stoffschlüssig, z.B. verklebt, und/oder formschlüssig und/oder kraftschlüssig, z.B. durch Schrauben oder Nieten.

Der Rahmen 11 definiert eine freie Fläche, die von dem Rahmen 11 umgeben ist. Das Filterelement 10 nimmt diese freie Fläche zur Gänze ein, sodass das zu reinigende Gas zwangsweise durch das Filterelement 10 durchströmen muss.

Das Filterelement 10 ist vorzugsweise ebenflächig, beispielsweise plattenförmig, ausgebildet. Es kann aus einen Filtergewebe oder einem Papierfilter oder einem anderen für die genannten Zwecke bekannten Filtermaterial, wie beispielsweise Aktivkohle (für Gase) bestehen und gegebenenfalls eine Stützstruktur aufweisen, falls die Eigensteifigkeit nicht ausreichen groß ist.

Das Filterelement 10 kann beispielsweis eine Fläche zwischen 5 m² und 40 m² aufweisen. Diese Angaben sind aber nicht beschränkend zu verstehen.

Der Rahmen 11 bildet einen Teil des Gehäuses 9, sodass also das Filtermodul 4 nicht in ein zusätzliches Gehäuse eingesetzt ist. Mit anderen Worten ausgedrückt ist das Gehäuse 9 der Vorrichtung 1 nach Fig.1 aus dem Saugmodulgehäuse 7, dem Anschlussmodulgehäuse 8 und dem zumindest einen Rahmen 11 des zumindest einen Filtermoduls 4, 5 gebildet.

Der Rahmen 11 kann eine für die Funktion des Filtermoduls 4 zweckmäßige Höhe 14 aufweisen. Die Höhe 14 kann beispielsweise zwischen 10 cm und 60 cm, insbesondere zwischen 10 cm und 40 cm, betragen. Mit "zweckmäßig" ist gemeint, dass das Filtermodul 4 auch ausreichend Volumen für die Aufnahme von aus dem Gas abgetrennten Stoffen aufweisen soll. Der Rahmen 11 kann also beispielsweise in Form eines Mantels eines Quaders bzw. generell mantelförmig ausgebildet sein. Der Begriff "Rahmen 11" ist im Sinne der Erfindung also nicht zwingend so zu verstehen, dass dieser relativ flach in Art eines Bilderrahmens gebildet ist und aus Leisten zusammengesetzt ist.

Prinzipiell kann der Rahmen 11 aus einem metallischen Werkstoff bestehen. In der bevorzugten Ausführungsvariante besteht der Rahmen 11 jedoch teilweise oder zur Gänze aus einem nichtmetallischen Werkstoff. Besonders bevorzugt wird dabei ein Faserwerkstoff eingesetzt, wie beispielsweise ein Holzfaserwerkstoff, z.B. MDF-Platten, oder auch aus Zellstoff oder Holzschliff oder Altpapier bestehende Werkstoffe, wie insbesondere Karton oder Wellpappe. Es können aber auch thermo- oder duroplastische Kunststoffe eingesetzt werden, beispielsweise in Form von Kunststoffplatten oder Stegplatten, etc.

Eine Stirnfläche 15 des Rahmens 11 kann mit zumindest einem Formschlusselement ausgebildet bzw. versehen sein, beispielsweise gestuft, nutförmig, mit einem Steg, etc., ausgeführt sein. Dabei können die beiden axialen Stirnflächen 15 des Rahmens 11 jeweils komplementäre Formschlusselemente aufweisen, sodass zwischen mehreren aufeinander gestellten Filtermodulen 4, 5 ein Formschluss ausgebildet wird.

Der Vollständigkeit halber sei angemerkt, dass die Filtermodule 4, 5 einer Vorrichtung 1 vorzugsweise die gleiche Querschnittsform und Querschnittsgröße aufweisen, sodass die Vorrichtung 1 vorzugsweise quaderförmig ausgebildet ist.

Alternativ oder zusätzlich zu der formschlüssigen Verbindung zwischen den einzelnen Modulen der Vorrichtung 1, also dem Saugmodul 2, dem Anschlussmodul 3 und den Filtermodulen 4, 5, können einzelne oder alle dieser Module kraftschlüssig miteinander verbunden sein. Insbesondere kann dazu gemäß einer Ausführungsvariante vorgesehen sein, dass zumindest einzelne dieser Module vorzugsweise sämtliche, mit Spann-Verschlüssen 16 miteinander verbunden sind. Die Spann-Verschlüsse 16 an sich können dem Stand der Technik hierfür entsprechend ausgebildet sein. Beim Schließen üben sie bekanntlich eine Zugkraft aus, die das Spannen der damit verbundenen Teile bewirkt. Die Spann-Verschlüsse 16 können ein Hakenelement und ein Bügelelement aufweisen, wobei das Bügelelement in das Hakenelement für das Schließen eingehakt wird und mit einer Schwenkbewegung geschlossen wird. Bügelelement und Hakenelement sind auf jeweils verschiedenen Modulen des Gehäuses 9 der Vorrichtung 1 befestigt. Die Spann-Verschlüsse 16 können gegebenenfalls ein Sicherungselement gegen unbeabsichtigtes Öffnen aufweisen.

Die kraftschlüssige Verbindung zwischen den Modulen des Gehäuses 9 der Vorrichtung 1 kann auch anders hergestellt sein, beispielsweise durch Schrauben, Kniehebel, mittels Excenterverbinder bestehend aus einem drehbaren Exzenter in dem der Kopf eines Bolzens aufgenommen ist, wobei der Exzenter in einem ersten Modul und der Bolzen in einem zweiten, unmittelbar an das erste Modul anschließenden Modul angeordnet sind, (wie dies für die Verbindung von Möbelkorpusplatten bekannt ist), etc.

Insbesondere sind die einzelnen Module der Vorrichtung 1 dichtend miteinander verbunden, sodass im Betrieb der Vorrichtung 1 zwischen den Modulen kein Gasstrom austritt. Dazu kann zwischen den Modulen ein Dichtelement 17, insbesondere eine Elastomerdichtung, angeordnet sein. Gemäß einer Ausführungsvariante der Vorrichtung 1 kann das Dichtelement 17 auch an den Rahmen 11 des Filtermoduls 4 angeformt sein, vorzugsweise an eine der Stirnflächen 15. Es können auch beide Stirnflächen 15 mit einem angeformten Dichtelement 17 versehen sein. Das Dichtelement 17 kann beispielsweise auch in einer Nut der Stirnfläche 15 teilweise aufgenommen sein.

Das Anformen selbst kann beispielsweise mittels Spritzguss oder durch Aufspritzen auf den Rahmen 11, etc., erfolgen.

Zur besseren Handhabbarkeit der Module, insbesondere des Filtermoduls 4, kann auf diesen/diesem zumindest ein Handhabungselement 18 angeordnet bzw. befestigt sein, wie dies aus Fig. 1 ersichtlich ist. Das Handhabungselement 18 kann ein Griff oder eine Schlaufe oder ein Band, etc. sein. Es ist auch möglich, dass das Handhabungselement 18 im Rahmen 11 selbst ausgebildet ist, beispielsweise als Griffmulde. Letztere kann gegebenenfalls auch als Gegenstück für einen Spann-Verschluss 16 verwendet werden, insbesondere wenn die Griffmulde hinterschnitten ausgeführt wird. Die Schlaufe bzw. das Band können außen und/oder innen am jeweiligen Modul befestigt sein.

Für die Entsorgung des Filtermoduls 4 kann dieses einfach zur Gänze von der Vorrichtung 1 abgenommen werden. Um dabei das Austreten oder Abschütteln des vom Filterelement 10 zurückgehaltenen Stoffes zu vermeiden, kann ein Abdeckelement vorgesehen sein. Das Abdeckelement kann beispielsweise auf die Stirnfläche 15 des Rahmens 11 aufgelegt werden, gegebenenfalls den Rahmen 11 übergreifend. Es kann auch ein Schlitz in einer Rahmenwand 13 vorgesehen werden, in den das Abdeckelement vor der Entfernung des Filtermoduls 4 aus der Vorrichtung 1 eingeschoben wird und damit das Filterelement 10 abgedeckt wird. Dieser Schlitz kann mit einer zerstörbaren Abdeckung, z.B. einer Folie, versehen sein, um damit die Gasdichtheit der Vorrichtung 1 im Betrieb zu ermöglichen.

Bei Bedarf kann zwischen dem Abdeckelement und dem Rahmen 11 eine Dichtung angeordnet werden, um damit einen dichten Verschluss des Filtermoduls 4 zu erreichen. Die Dichtung kann durch das voranstehend genannte Dichtelement 17 gebildet sein. Die Dichtung kann aber auch gesondert aufgelegt oder mit dem Abdeckelement verbunden, beispielsweise verklebt oder angeformt, sein.

Weiter kann das Abdeckelement mit dem Rahmen 11 verbunden werden, beispielsweise über eine der voranstehend genannten form- und/oder kraftschlüssigen Verbindungselemente für die Verbindung der Module der Vorrichtung 1 miteinander, wie z.B. den Spann-Verschluss 16, etc.

Es kann weiter vorgesehen sein, dass an der Vorrichtung 1, insbesondere dem Saugmodul 2, Räder 19 angeordnet sind, um die Mobilität der Vorrichtung 1 zu erhöhen.

In den Fig. 2 und 3 ist auch ein Schlauch 20 dargestellt. Dieser Schlauch 20 ist an dem Rahmen 11 angeordnet und hat zumindest eine Strömungsverbindung in den vom Rahmen 11 umgebenen Raum 21 (Volumen) des Filtermoduls 4. Es ist damit eine Differenzdruckmessung des Filterwiderstandes möglich. Aus dem Filterwiderstand kann auf den Verschmutzungsgrad des Filterelements 10 geschlossen werden. Je höher der Widerstand ist, verglichen mit dem Wert eines Filterelementes 10 gleicher Filterklasse, desto mehr aus dem Gas gefiltertes Material befindet sich im/auf dem Filterelement 10.

Der Schlauch 20 ist mit einem nicht weiter dargestellten Druckmessgerät, insbesondere einem Differenzdrucksensor, verbunden. Für die Differenzdruckmessung sind zwei Messstelle 22, 23 vorzusehen. Jede der Messstellen 22, 23 weist einen Schlauch 20 auf. Bevorzugt sind also pro Filtermodul 4, 5 zumindest zwei Schläuche 20 bzw. Messstellen 22, 23 angeordnet, wie dies aus den Fig. 2 und 3 ersichtlich ist. Die Messstelle 22 und somit ein Schlauch 20 ist dabei unterhalb des Filterelements 10 und die Messstelle 23 und somit ein Schlauch 20 ist oberhalb des Filterelements 10 angeordnet. Es ist aber auch möglich, dass pro Filtermodul 4, 5 jeweils nur eine Messstelle 22 vorhanden ist, und somit die Differenzdruckmessung zwischen zwei Modulen stattfindet.

Der Schlauch 20 oder die Schläuche 20 können in einem Schutzrohr angeordnet sein. Anstelle der Schläuche 20 oder in Strömungsverbindung mit diesen können auch andere Leitungselemente, wie z.B. Rohre, etc., angeordnet sein.

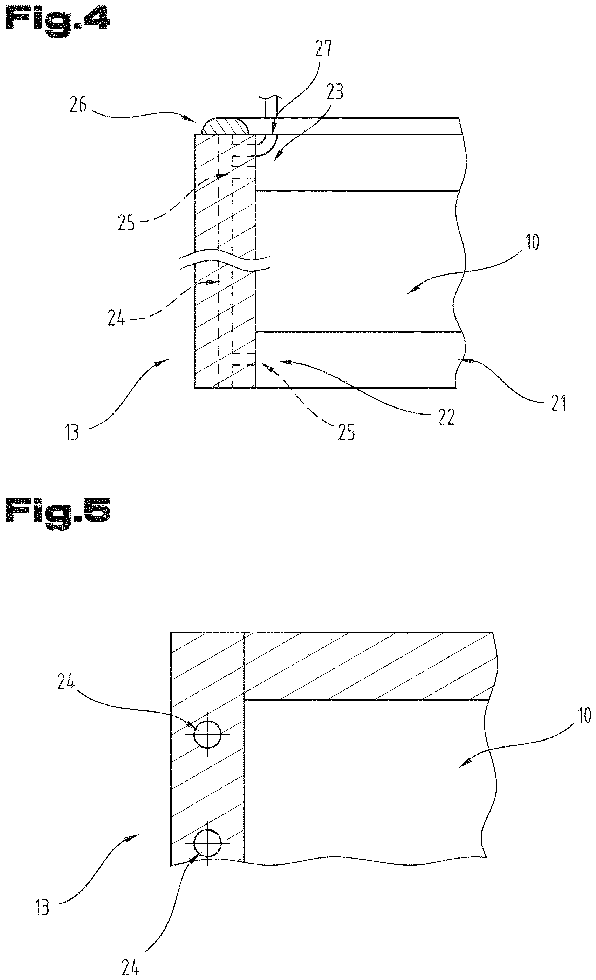

In den Fig. 4 und 5 ist eine weitere Ausführungsvariante der Feststellbarkeit der Filterverschmutzung mittels Differenzdruckmessung dargestellt. Dabei ist innerhalb zumindest einer der Rahmenwände 13 zumindest ein Strömungskanal 24 angeordnet. Vorzugsweise sind zwei derartige Strömungskanäle 24 pro Filtermodul 4, 5 vorgesehen. Der Strömungskanal 24 erstreckt bzw. die Strömungskanäle 24 erstrecken sich vorzugsweise in vertikaler Richtung. Weiter weist der Strömungskanal 24 bzw. die Strömungskanäle 24 ein Strömungsverbindung 25 in den Raum 21 des Filtermoduls 4 auf, wobei die Strömungskanäle 24 jeweils gesonderte Strömungsverbindungen 25 aufweisen und die Strömungskanäle 24 nicht miteinander verbunden sind, um den jeweils richtigen Wert der jeweiligen Messstelle 22, 23 zu erfassen.

Der Strömungskanal 24 bzw. die Strömungskanäle 24 und/oder die Strömungsverbindungen 25 können in Form von Bohrungen in das Filtermodul 4 bzw. die Filtermodul 4, 5 eingebracht sein. Er kann bzw. sie können aber auch bereits bei der Herstellung des Filtermoduls 4 bzw. der Filtermodule 4, 5 entsprechend geformt worden sein. Der Strömungskanal 24 bzw. die Strömungskanäle 24 und/oder die Strömungsverbindungen 25 können eine runden oder eine viereckigen bzw. generell polygonalen Querschnitt aufweisen.

Sofern sich der Strömungskanal 24 bzw. die Strömungskanäle 24 über die gesamte Höhe eines Filtermoduls 4 erstrecken, kann zumindest eine der beiden Austrittsstellen im Rahmen 11, beispielsweise die obere, mit einem Dichtelement 26 verschlossen sein. Das Dichtelement 26 kann beispielsweise durch das Dichtelement 17 bzw. die Elastomerdichtung gebildet sein, mit dem/der die Filtermodule 4, 5 dichtend aneinander angeordnet werden können, wie dies voranstehend ausgeführt wurde.

Bei Bedarf kann zumindest einer der Strömungskanäle 24 in der Rahmenwand 13 eines Filtermoduls 4 mit einem Strömungskanal 24 in der (gleichen) Rahmenwand 13 strömungsverbunden sein. Die Strömungsverbindung der Strömungskanäle 24 kann automatisch beim Aufeinander anordnen der Filtermodule 4, 5 ausgebildet werden, sodass ein durch mehrere Filtermodule 4, 5 durchgehender Strömungskanal 24 entsteht. Das Dichtelement 26 kann dementsprechend anders angeordnet oder mit einer Ausnehmung versehen werden, um diese Strömungsverbindung zuzulassen.

Weiter kann zwischen den Filtermodulen 4, 5 (insbesondere zwischen unmittelbar benachbarte Filtermodulen 4, 5) über eine weiteres Strömungsverbindungselement (z.B. einen Schlauch) eine Strömungsverbindung hergestellt sein.

Die Ausführungsbeispiele zeigen bzw. beschreiben mögliche Ausführungsvarianten der Vorrichtung 1 zur Abtrennung eines (Fest)Stoffes aus einem Gas, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus der Vorrichtung 1 diese bzw. deren Bestandteile nicht zwingenderweise maßstäblich dargestellt sind.

### Bezugszeichenaufstellung

- 1: Vorrichtung
- 2: Saugmodul
- 3: Anschlussmodul
- 4: Filtermodul
- 5: Filtermodul

- 6: Einlass
- 7: Saugmodulgehäuse
- 8: Anschlussmodulgehäuse
- 9: Gehäuse
- 10: Filterelement

- 11: Rahmen
- 12: Steg
- 13: Rahmenwand
- 14: Höhe
- 15: Stirnfläche

- 16: Spann-Verschluss
- 17: Dichtelement
- 18: Handhabungselement
- 19: Rad
- 20: Schlauch

- 21: Raum
- 22: Messstelle
- 23: Messstelle
- 24: Strömungskanal
- 25: Strömungsverbindung

- 26: Dichtelement
- 27: Strömungsverbindungselement

## Patentansprüche

1. Vorrichtung (1) zur Abtrennung eines Stoffes aus einem Gas, umfassend ein Gehäuse (9), das eine äußere Hülle der Vorrichtung (1) bildet, zumindest ein Filtermodul (4, 5), wobei das Filtermodul (4, 5) zumindest ein Filterelement (10) aufweist, das in einem Rahmen (11) gehalten ist, der einen Teil des Gehäuses (9) bildet, und der Rahmen (11) eine freie Fläche definiert, die von dem Rahmen (11) umgeben ist, wobei die Vorrichtung (1) weiter ein Saugmodul mit einem Saugmodulgehäuse (7) aufweist, wobei das Saugmodul (2) und das zumindest eine Filtermodul (4, 5) übereinander angeordnet sind, **dadurch gekennzeichnet, dass** die Vorrichtung (1) weiter ein Anschlussmodul (3) aufweist, das zumindest einen Einlass (6) für das verunreinigte Gas aufweist, und das ein Anschlussmodulgehäuse (8) aufweist, das einen Teil des Gehäuses (9) bildet, sodass das Gehäuse (9) aus dem Saugmodulgehäuse (7), dem Anschlussmodulgehäuse (8) und dem Rahmen (11) des Filtermoduls (4) oder den Rahmen (11) der Filtermodule (4, 5) gebildet ist, wobei das Anschlussmodul (3) über dem zumindest einen Filtermodul (4, 5) angeordnet ist, sodass das zumindest eine Filtermodul (4, 5) zwischen dem Anschlussmodul (3) und dem Saugmodul (2) angeordnet ist, und das Saugmodul (2) ausschließlich über das Filtermodul (4) oder die mehreren Filtermodule (4, 5) mit dem Anschlussmodul (3) verbunden ist und wobei das Filterelement (10) mit dem Rahmen (11) des Filtermoduls (4) nicht lösbar verbunden ist oder die Filterelemente (10) mit dem zugehörigen Rahmen (11) des jeweiligen Filtermoduls (4, 5) nicht lösbar verbunden sind, und wobei das Filterelement (10) die vom Rahmen (11) definierte freie Fläche zur Gänze einnimmt, sodass das zu reinigende Gas das Filterelement (10) durchströmen muss.

2. Vorrichtung (1) nach Anspruch 1, **dadurch gekennzeichnet, dass** der Rahmen (11) des Filtermoduls (4) oder die Rahmen (11) der Filtermodule (4, 5) aus einem nichtmetallischen Werkstoff besteht.

3. Vorrichtung (1) nach Anspruch 2, **dadurch gekennzeichnet, dass** der Rahmen (11) des Filtermoduls (4) oder die Rahmen (11) der Filtermodule (4, 5) zumindest teilweise aus einem Faserwerkstoff besteht.

4. Vorrichtung (1) nach einem der Ansprüche 1 bis 3, **dadurch gekennzeichnet, dass** an dem Filtermodul (4, 5) ein Dichtelement (17) angeformt ist.

5. Vorrichtung (1) nach einem der Ansprüche 1 bis 4, **dadurch gekennzeichnet, dass** die mehreren Filtermodule (4, 5) über Spann-Verschlüsse (16) miteinander verbunden sind.

6. Vorrichtung (1) nach einem der Ansprüche 1 bis 5, **dadurch gekennzeichnet, dass** zwischen Gehäuseteilen ein Formschluss ausgebildet ist.

7. Vorrichtung (1) nach einem der Ansprüche 1 bis 6, **dadurch gekennzeichnet, dass** an dem zumindest einen Filtermodul (4, 5) zumindest ein Handhabungselement (18) angeordnet ist.

8. Vorrichtung (1) nach einem der Ansprüche 1 bis 7, **dadurch gekennzeichnet, dass** in zumindest einer Rahmenwand (13) zumindest ein Strömungskanal (24) angeordnet ist, der zu einem vom Rahmen (11) umgebenen Raum (21) eine Strömungsverbindung (24) aufweist.

9. Vorrichtung nach Anspruch 8, dass pro Filtermodul (4, 5) zumindest zwei Strömungskanäle (24) im Rahmen (11) angeordnet sind, wobei ein Strömungskanal (24) mit einer ersten Messstelle (22) unterhalb des Filterelementes (10) strömungsverbunden ist und der zweite Strömungskanal (24) mit einer zweiten Messstelle (23) oberhalb des Filterelementes (10) strömungsverbunden ist.

10. Vorrichtung (1) nach einem der Ansprüche 1 bis 9, **dadurch gekennzeichnet, dass** eine Höhe (14) des Rahmens (11) des Filtermoduls 4 zwischen 10 cm und 60 cm beträgt.

## Claims

1. A device (1) for separating a substance from a gas, comprising a housing (9) forming an outer shell of the device (1), at least one filter module (4, 5), wherein the filter module (4, 5) has at least one filter element (10) held in a frame (11) forming part of the housing (9), and the frame (11) defines a free surface surrounded by the frame (11), wherein the device (1) further comprises a suction module with a suction module housing (7), wherein the suction module (2) and the at least one filter module (4, 5) are arranged one above the other, **characterized in that** the device (1) further comprises a connection module (3) which has at least one inlet (6) for the contaminated gas and which has a connection module housing (8) which forms part of the housing (9), so that the housing (9) is formed by the suction module housing (7), the connection module housing (8) and the frame (11) of the filter module (4) or the frames (11) of the filter modules (4, 5), wherein the connection module (3) is arranged above the at least one filter module (4, 5), so that the at least one filter module (4, 5) is arranged between the connection module (3) and the suction module (2), and the suction module (2) is connected exclusively via the filter module (4) or the plurality of filter modules (4, 5) with the connection module (3), and wherein the filter element (10) is non-detachably connected to the frame (11) of the filter module (4) or the filter elements (10) are non-detachably connected to the associated frame (11) of the respective filter module (4, 5), and wherein the filter element (10) completely occupies the free area defined by the frame (11), so that the gas to be cleaned must flow through the filter element (10).

2. The device (1) according to claim 1, **characterized in that** the frame (11) of the filter module (4) consists or the frames (11) of the filter modules (4, 5) consist of a non-metallic material.

3. The device (1) according to claim 2, **characterized in that** the frame (11) of the filter module (4) consists or the frames (11) of the filter modules (4, 5) consist at least partially of a fiber material.

4. The device (1) according to one of claims 1 to 3, **characterized in that** a sealing element (17) is formed on the filter module (4, 5).

5. The device (1) according to one of claims 1 to 4, **characterized in that** the plurality of filter modules (4, 5) are connected to one another via clamping fasteners (16).

6. The device (1) according to one of claims 1 to 5, **characterized in that** a positive connection is formed between housing parts.

7. The device (1) according to one of claims 1 to 6, **characterized in that** at least one handling element (18) is arranged on the at least one filter module (4, 5).

8. The device (1) according to one of claims 1 to 7, **characterized in that** at least one flow channel (24), which has a flow connection (24) to a space (21) surrounded by the frame (11), is arranged in at least one frame wall (13).

9. The device according to claim 8, **characterized in that** at least two flow channels (24) are arranged in the frame (11), wherein one flow channel (24) is flow-connected to a first measuring point (22) below the filter element (10) and the second flow channel (24) is flow-connected to a second measuring point (23) above the filter element (10).

10. The device (1) according to one of claims 1 to 9, **characterized in that** a height (14) of the frame (11) of the filter module (4) is between 10 cm and 60 cm.

## Revendications

1. Dispositif (1) permettant de séparer une substance d'un gaz, comprenant un boîtier (9) formant une enveloppe extérieure du dispositif (1), au moins un module de filtration (4, 5), dans lequel le module de filtration (4, 5) présente au moins un élément de filtration (10) retenu dans un cadre (11) formant une partie du boîtier (9), et le cadre (11) définit une surface libre entourée par le cadre (11), dans lequel le dispositif (1) comprend en outre un module d'aspiration comprenant un boîtier de module d'aspiration (7), dans lequel le module d'aspiration (2) et le au moins un module de filtration (4, 5) sont agencés de manière superposée, **caractérisé en ce que** le dispositif (1) présente en outre un module de raccordement (3) qui présente au moins une entrée (6) pour le gaz non purifié et qui présente un boîtier de module de raccordement (8) qui forme une partie du boîtier (9), de sorte que le boîtier (9) est formé à partir du boîtier de module d'aspiration (7), du boîtier de module de raccordement (8) et du cadre (11) du module de filtration (4), ou des cadres (11) des modules de filtration (4, 5), dans lequel le module de raccordement (3) est agencé au-dessus du au moins un module de filtration (4, 5), de sorte que le au moins un module de filtration (4, 5) est agencé entre le module de raccordement (3) et le module d'aspiration (2), et le module d'aspiration (2) est relié au module de raccordement (3) exclusivement grâce au module de filtration (4) ou grâce aux plusieurs modules de filtration (4, 5), et dans lequel l'élément de filtration (10) est relié de manière non amovible au cadre (11) du module de filtration (4), ou dans lequel les éléments de filtration (10) sont reliés de manière non amovible au cadre (11) correspondant du module de filtration (4, 5) respectif, et dans lequel l'élément de filtration (10) occupe la totalité de la surface libre définie par le cadre (11), de sorte que le gaz à purifier doit circuler à travers l'élément de filtration(10).

2. Dispositif (1) selon la revendication 1, **caractérisé en ce que** le cadre (11) du module de filtration (4) est ou des cadres (11) des modules de filtration (4, 5) sont constitué d'un matériau non métallique.

3. Dispositif (1) selon la revendication 2, **caractérisé en ce que** le cadre (11) du module de filtration (4) est ou des cadres (11) des modules de filtration (4, 5) sont constitué au moins partiellement d'un matériau à base de fibres.

4. Dispositif (1) selon l'une quelconque des revendications 1 à 3, **caractérisé en ce qu'**un élément d'étanchéité (17) est appliqué sur le module de filtration (4, 5).

5. Dispositif (1) selon l'une quelconque des revendications 1 à 4, **caractérisé en ce que** les plusieurs modules de filtration (4, 5) sont reliés entre eux grâce à des attaches par serrage (16).

6. Dispositif (1) selon l'une quelconque des revendications 1 à 5, **caractérisé en ce qu'**une liaison par complémentarité de forme est créée entre les parties de boîtier.

7. Dispositif (1) selon l'une quelconque des revendications 1 à 6, **caractérisé en ce qu'**au moins un élément de manipulation (18) est agencé sur le au moins un module de filtration (4, 5).

8. Dispositif (1) selon l'une quelconque des revendications 1 à 7, **caractérisé en ce qu'**au moins un canal d'écoulement (24) présentant une liaison fluidique (24) avec une chambre (21) entourée par le cadre (11) est agencé dans au moins une paroi de cadre (13).

9. Dispositif selon la revendication 8, **caractérisé en ce qu'**au moins deux canaux d'écoulement (24) sont agencés dans le cadre (11), dans lequel un canal d'écoulement (24) est relié de manière fluidique à un premier point de mesure (22) en dessous de l'élément de filtration (10) et le deuxième canal d'écoulement (24) est relié de manière fluidique à un deuxième point de mesure (23) au-dessus de l'élément de filtration (10).

10. Dispositif (1) selon l'une quelconque des revendications 1 à 9, **caractérisé en ce qu'**une hauteur (14) du cadre (11) du module de filtration (4) est comprise entre 10 cm et 60 cm.
